# EUROPÄISCHE PATENTANMELDUNG

(11) **EP 1 281 444 A1**
(43) Veröffentlichungstag der Anmeldung: **05.02.2003**
(21) Anmeldenummer: 02011022.7
(22) Anmeldetag: 17.05.2002
(51) Int. Cl.: B08B 3/02, G01L 9/00

(54) **Flüssigkeitsabgabeeinrichtung für ein Hochdruckreinigungsgerät**

(30) Priorität: 29.06.2001 DE 10131644
(71) Anmelder: Alfred Kärcher GmbH & Co., 71364 Winnenden (DE)
(72) Erfinder: Vorholzer, Gerhard, 74427 Fichtenberg (DE); Gehringer, Hagen Dr., 70771 Leinfelden-Echterdingen (DE)
(74) Vertreter: Hoeger, Stellrecht & Partner

(57) **Zusammenfassung**

Um bei einer Flüssigkeitsabgabeeinrichtung für ein Hochdruckreinigungsgerät, insbesondere in Form einer Handspritzpistole (1), mit einer Flüssigkeitsleitung (2) und mit einem den Druck in dieser messenden Drucksensor (12), dem eine Druckanzeigeeinrichtung (14) zugeordnet ist, einen kompakten Aufbau und eine hohe Betriebssicherheit zu ermöglichen, wird vorgeschlagen, daß der Drucksensor (12) ein elektrischer Meßwertgeber ist, der ein vom Druck in der Flüssigkeitsleitung (2) abhängiges elektrisches Signal erzeugt, daß die Druckanzeigeeinrichtung (14) in Abhängigkeit von diesem elektrischen Signal unterschiedliche optische Anzeigen erzeugt und daß der Drucksensor (12), die Anzeigeeinrichtung (14) und eine diesen zugeordnete elektrische Schaltung (16,17) in der Flüssigkeitsabgabeeinrichtung angeordnet sind.

## Beschreibung

Die Erfindung betrifft eine Flüssigkeitsabgabeeinrichtung für ein Hochdruckreinigungsgerät, insbesondere in Form einer Handspritzpistole, mit einer Flüssigkeitsleitung und mit einem den Druck in dieser messenden Drucksensor, dem eine Druckanzeigeeinrichtung zugeordnet ist.

Bei der Abgabe von Reinigungsflüssigkeit aus einem Hochdruckreinigungsgerät werden Handspritzpistolen, Sprühlanzen und ähnliche Handhabungsgeräte verwendet, mit denen eine Bedienungsperson den Flüssigkeitsstrahl auf das zu reinigende Objekt richten kann, gleichzeitig aber auch über Dosier- und Schließventile die Art des abgegebenen Flüssigkeitsstrahles regeln und gegebenenfalls auch die Flüssigkeitsabgabe unterbrechen kann. Dabei ist es bekannt, an dieser Flüssigkeitsabgabeeinrichtung eine Druckanzeige vorzusehen, an der die Bedienungsperson den Flüssigkeitsdruck in der Flüssigkeitsleitung ablesen kann, dieser Flüssigkeitsdruck ändert sich in Abhängigkeit vom Öffnungszustand der Abgabeeinrichtung oder in Abhängigkeit von den Betriebsparametern des Hochdruckreinigungsgerätes, die direkt an diesem eingestellt werden können, die aber auch über Steuersignale von der Abgabeeinrichtung aus beeinflußbar sind. Bei bekannten Abgabeeinrichtungen werden mechanisch arbeitende Drucksensoren und mechanisch arbeitende Anzeigeeinrichtungen verwendet (DE 34 31 800 A1; DE 87 09 954 U), die relativ aufwendig im Bau sind und bei denen aufgrund der bewegten Teile die Gefahr von Beschädigungen besteht.

Es ist Aufgabe der Erfindung, eine gattungsgemäße Flüssigkeitsabgabeeinrichtung so auszugestalten, daß die Druckmeß- und Anzeigeeinrichtung im wesentlichen auf bewegte Teile verzichtet und einen besonders störsicheren Aufbau aufweist.

Diese Aufgabe wird bei einer Flüssigkeitsabgabeeinrichtung der eingangs beschriebenen Art erfindungsgemäß dadurch gelöst, daß der Drucksensor ein elektrischer Meßwertgeber ist, der ein vom Druck in der Flüssigkeitsleitung abhängiges elektrisches Signal erzeugt, daß die Druckanzeigeeinrichtung in Abhängigkeit von diesem Signal unterschiedliche optische Anzeigen erzeugt und daß der Drucksensor, die Anzeigeeinrichtung und eine diesen zugeordnete elektrische Schaltung in der Flüssigkeitsabgabeeinrichtung angeordnet sind. Durch die Verwendung elektrischer Meßwertgeber und elektrischer Anzeigeeinrichtungen stehen dem Konstrukteur eine große Anzahl unterschiedlicher physikalischer Effekte zur Verfügung, die zur Druckmessung einerseits und zur Anzeige andererseits verwendet werden können, so daß eine optimale Anpassung der jeweiligen Druckmeß- und Anzeigeeinrichtung an die Wünsche des Konstrukteurs möglich ist.

In einem einfachsten Fall kann der Drucksensor ein mechanischer Drucksensor sein, der eine mechanische, druckabhängige Verschiebung in ein elektrisches Signal umwandelt, die Anzeigeeinrichtung kann ebenfalls eine mechanische Anzeige sein, bei der ein elektrisches Signal in eine Verschiebung eines Zeigers oder eine ähnliche Bewegung umgesetzt wird.

Besonders vorteilhaft ist es jedoch, wenn Bauteile verwendet werden, die im wesentlichen ohne größere mechanische Verschiebungen auskommen, dadurch kann die Baugröße herabgesetzt werden, und es ergibt sich auch keine Empfindlichkeit der Anordnung gegenüber einer Bewegung der Flüssigkeitsabgabeeinrichtung.

Bei einer bevorzugten Ausführungsform kann beispielsweise vorgesehen sein, daß der Drucksensor eine vom Druck in der Flüssigkeitsleitung abhängig dehnbare Folie umfaßt, die bei Dehnung eine elektrische Spannung erzeugt oder eine angelegte elektrische Spannung oder einen durch sie fließenden elektrischen Strom verändert.

Insbesondere kann die Folie piezoelektrisches Material umfassen.

Es ist auch möglich, daß der Drucksensor einen vom Druck in der Flüssigkeitsleitung abhängig dehnbaren Dehnmeßstreifen umfaßt.

Bei wieder einer anderen Ausführungsform kann vorgesehen sein, daß der Drucksensor eine Glasfaser umfaßt, deren Lichtleitverhalten sich abhängig von einer Dehnung und/oder Biegung ändert.

Gemäß einer weiteren bevorzugten Ausführungsform wird der Drucksensor als monolithischer Keramiksensor ausgebildet. Diese Keramiksensoren sind besonders widerstandsfähig gegen äußere Einflüsse und weisen eine hervorragende chemische Beständigkeit auf, so daß sie direkt mit der Reinigungsflüssigkeit in Verbindung gebracht werden können.

Weiterhin ist es günstig, wenn die optische Anzeige mehrere optische Anzeigefelder umfaßt, die beim Ansteigen der Druckwerte stufenweise aktivierbar sind. Die Bedienungsperson kann dann einfach an der Zahl der aktivierten Anzeigefelder feststellen, in welchem Druckbereich gearbeitet wird. Die Anzeigefelder können dabei sehr unterschiedlicher Natur sein, beispielsweise können die Anzeigefelder Leuchtquellen aufweisen, insbesondere Leuchtdioden.

Die Anzeigefelder können auch Teilbereiche einer Bildschirmanzeige oder einer Flüssigkristallanzeige sein.

Es ist dabei günstig, wenn die Anzeigefelder in einer Reihe nebeneinander liegen, so daß bei der stufenweise erfolgenden Aktivierung der Anzeigefelder ein kontinuierlicher Streifen entsteht, dessen Länge sich beim Hinzufügen aktivierter Anzeigefelder ändert, die Bedienungsperson kann dann einfach an der Länge dieses Streifen den jeweiligen Druckzustand ablesen.

Besonders vorteilhaft ist es, wenn der Drucksensor, die Druckanzeigeeinrichtung sowie die diesen zugeordnete elektrische Schaltung auf einem gemeinsamen Träger angeordnet sind. Dadurch ergibt sich eine Baueinheit, die die gesamte Druckmeßeinrichtung umfaßt. Vorzugsweise ist der Träger herausnehmbar in die Flüssigkeitsabgabeeinrichtung eingesetzt, so daß die Montage erleichtert wird, es andererseits aber auch möglich ist, die gesamte Baueinheit aus der Flüssigkeitsabgabeeinrichtung zu entnehmen, beispielsweise um eine Batterie auszuwechseln oder um die Flüssigkeitsabgabeeinrichtung für eine andere Betriebsart umzurüsten.

Besonders vorteilhaft ist es, wenn der Träger eine elektrische Leiterplatte ist, auf die alle Teile dieser Druckmeß- und Anzeigeeinrichtung montiert sind.

Die Flüssigkeitsabgabeeinrichtung kann ein Gehäuse umfassen mit einem entfernbaren und wiederverschließbaren Deckel, der den Zugang zu dem Träger oder das Auswechseln des Trägers ermöglicht. Durch diesen Deckel kann beispielsweise eine Batterie ausgewechselt werden, es ist aber gegebenenfalls auch möglich, durch den vom Dekkel freigegebenen Zugang den Träger vollständig hindurchzuführen.

Bei einer bevorzugten Ausführungsform ist vorgesehen, daß dem Meßwertgeber ein Anschlußstutzen zugeordnet ist, der abgedichtet in ein Anschlußstück der Flüssigkeitsleitung einsetzbar ist. Wenn alle Elemente der Druckmeß- und Anzeigeeinrichtung auf einem gemeinsamen Träger angeordnet sind, dann kann dieser Träger über den Anschlußstutzen unmittelbar an der Flüssigkeitsleitung festgelegt werden, beispielsweise durch Einschieben des Anschlußstutzens in ein hülsenförmiges Anschlußstück der Flüssigkeitsleitung.

Die nachfolgende Beschreibung einer bevorzugten Ausführungsform der Erfindung dient im Zusammenhang mit der Zeichnung der näheren Erläuterung. Es zeigen:

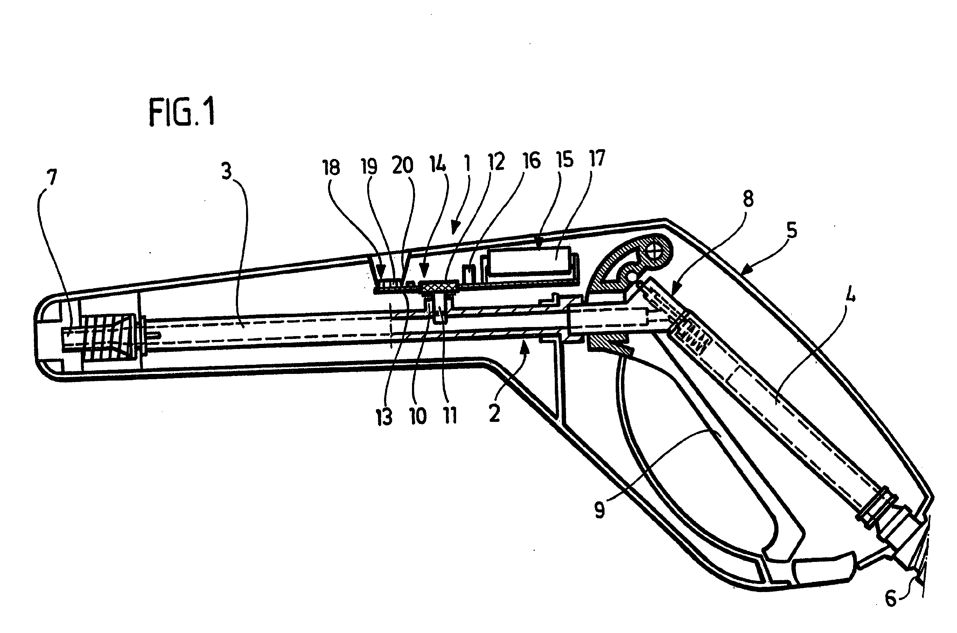

- Figur 1:: eine schematische Längsschnittansicht durch eine Handspritzpistole eines Hochdruckreinigungsgerätes;

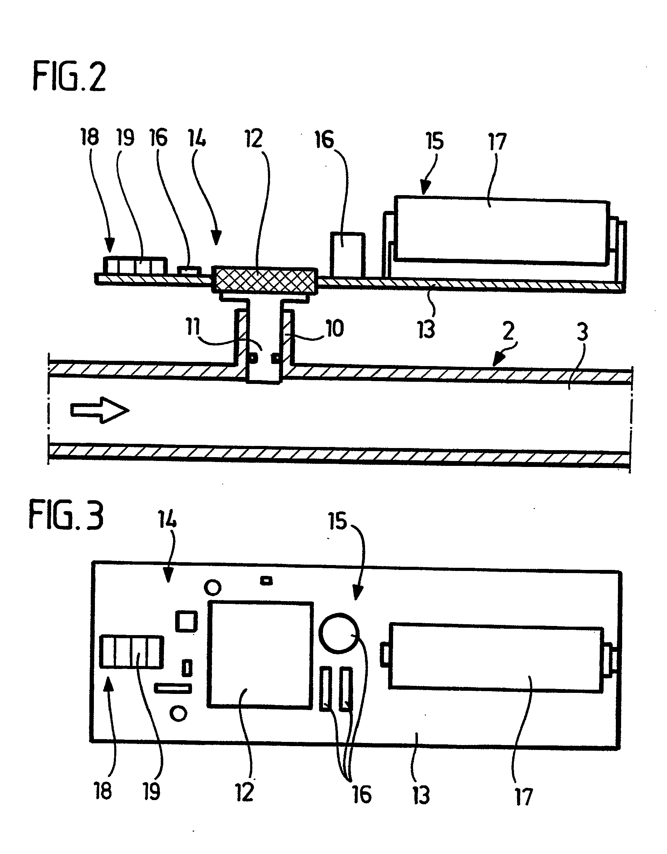

- Figur 2:: eine vergrößerte Längsschnittansicht eines Teils der Flüssigkeitsleitung in der Handspritzpistole der Figur 1 mit einer aufgesetzten Druckmeß- und Anzeigeeinrichtung und
- Figur 3:: eine Draufsicht auf die Druckmeß- und Anzeigeeinrichtung der Figur 2.

Die in der Zeichnung dargestellte Handspritzpistole 1 umfaßt eine durchgehende Flüssigkeitsleitung 2 in Form von zwei winkelig miteinander verbundenen Rohrstücken 3, 4. Diese Flüssigkeitsleitung 2 ist in einem zweischaligen Gehäuse 5 aufgenommen. An ihrem Einlaßende ist die Flüssigkeitsleitung 2 mit einem zu einem in der Zeichnung nicht dargestellten Hochdruckreinigungsgerät führenden flexiblen Hochdruckschlauch 6 verbunden, am anderen Ende schließt sich an die Flüssigkeitsleitung 2 eine Abgabedüse 7 an, über die durch die Flüssigkeitsleitung 2 geförderte Flüssigkeit in die Umgebung abgegeben wird.

Im Übergangsbereich der beiden Rohrstücke 3 und 4 ist ein Schließ-und Dosierventil 8 angeordnet, welches über einen am Gehäuse 5 bewegbar gehaltenen Handgriff 9 betätigbar ist, so daß eine Bedienungsperson über den Handgriff 9 die Menge der über die Abgabedüse 7 austretenden Flüssigkeit und gegebenenfalls auch den Charakter des Flüssigkeitsstrahls beeinflussen kann.

Stromabwärts des Schließ- und Dosierventils 8 ist an der Flüssigkeitsleitung 2 ein senkrecht abstehender, hülsenförmiger Anschlußstutzen 10 angeordnet, der mit dem Innenraum der Flüssigkeitsleitung 2 in Verbindung steht. In diesen Anschlußstutzen 10 ist abgedichtet ein Rohrstück 11 eingeschoben, welches mit einem Drucksensor 12 verbunden ist, der auf diese Weise mit dem Innenraum der Flüssigkeitsleitung 2 in Verbindung steht und dadurch in die Lage versetzt ist, den Druck in der Flüssigkeitsleitung 2 zu bestimmen.

Der Drucksensor 12 ist auf einer elektrischen Leiterplatte 13 montiert, die einen Träger für eine größere Anzahl von Bauelementen bildet, wobei der Träger und diese Bauelemente gemeinsam eine Druckmeß- und Anzeigeeinrichtung 14 ausbilden. Der Drucksensor 12 erzeugt ein elektrisches Signal, welches sich in Abhängigkeit vom Druck in der Flüssigkeitsleitung 2 ändert und welches somit ein Maß für diesen Druck ist. Beispielsweise kann dieser Drucksensor 12 eine Folie umfassen, die bei unterschiedlichem Druck in der Flüssigkeitsleitung 2 eine unterschiedliche Dehnung erfährt und die in Abhängigkeit von dieser Dehnung elektrische Signale beeinflußt oder erzeugt, dies ist beispielsweise mit sogenannten piezoelektrischen Folien möglich, die bei Dehnung eine Spannung erzeugen. Denkbar wären hier auch monolithische Keramiksensoren, Dehnmeßstreifen, verformbare oder dehnbare Glasfasern, die bei Verformung und/oder Dehnung ihr Lichtleitungsverhalten ändern. Wesentlich ist lediglich, daß die Drucksensoren in Abhängigkeit vom Druck in der Flüssigkeitsleitung 2 unterschiedliche elektrische Signale erzeugen.

Diese elektrischen Signale werden einer elektrischen Schaltung 15 zugeführt, die diverse in der Zeichnung nur schematisch dargestellte Bauteile 16 umfaßt, die ebenfalls alle auf der Leiterplatte 13 montiert sind. Zu dieser elektrischen Schaltung 15 gehört auch eine Spannungsquelle, insbesondere in Form einer auswechselbaren Batterie 17.

Schließlich trägt die elektrische Leiterplatte 13 auch optische Anzeigeelemente 18, im dargestellten Ausführungsbeispiel in Form von vier in einer Reihe nebeneinander angeordneten Leuchtdioden 19, die von der elektrischen Schaltung 15 wahlweise aktiviert und deaktiviert werden, so daß sie wahlweise leuchten oder abgeschaltet sind. Die Aktivierung erfolgt dabei so, daß beim Ansteigen der Druckwerte in der Flüssigkeitsleitung stufenweise Leuchtdioden 19 zugeschaltet werden, daß also der von den in einer Reihe nebeneinander liegenden Leuchtdioden gebildete Streifen vergrößert wird. Der Benutzer kann dann an der Länge des leuchtenden Streifens ohne weiteres erkennen, in welchem Druckbereich gearbeitet wird.

Selbstverständlich kann die Zahl der Leuchtdioden größer sein als vier, es können auch andere Leuchtquellen in ähnlicher Weise verwendet werden, die optischen Anzeigeelemente 18 können auch durch andere Anzeigefelder ersetzt werden, beispielsweise Anzeigefelder auf einem Bildschirm oder auf einer Flüssigkristallanzeige. Bei einer Leuchtdioden verwendenden Anzeige ist es günstig, wenn die elektrische Schaltung eine Verstärkerschaltung und eine Komparatorschaltung erfaßt. Die Verstärkerschaltung dient dabei der Verstärkung des Signals des Drucksensors, die Komparatorschaltung dient dagegen der Ansteuerung der Anzeigeelemente. Diese Komparatorschaltung kann einen Schwellenschalter aufweisen, der bei Überschreiten einer bestimmten Schwellenspannung die Anzeigeelemente aktiviert.

Bei einer weiteren Ausgestaltung kann vorgesehen sein, daß die Schaltung eine Signalfiltereinrichtung umfaßt. Dadurch können die im Betrieb des Hochdruckreinigungsgerätes auftretenden Druckschwankungen kompensiert werden, man erhält dann eine gleichmäßige Anzeige trotz auftretender Druckschwankungen.

Falls anstelle einer Leuchtdiodenanzeige eine Flüssigkristallanzeige verwendet wird, ist es günstig, in der Schaltung einen Analog-Digitalumwandler zu verwenden.

Die elektrische Leiterplatte 13 mit den darauf montierten Bauteilen kann durch einen in der Zeichnung nicht gesondert dargestellten Zugang in das Gehäuse 5 eingeführt werden, dieser Zugang kann durch einen verschließbaren und entfernbaren Deckel verschlossen sein. Dabei kann der Zugang so bemessen sein, daß lediglich ein Teilbereich der elektrischen Leiterplatte 13 zugänglich ist, beispielsweise die elektrische Batterie 17, die durch diesen Zugang hindurch ausgewechselt werden kann, oder aber die gesamte elektrische Leiterplatte, so daß diese durch den Zugang hindurch vollständig eingeführt und wieder entnommen werden kann.

Es ist im Gehäuse 5 weiterhin eine schachtförmige Vertiefung 20 vorgesehen, welche die optischen Anzeigeelemente 18 umgibt, so daß diese geschützt unterhalb der Außenfläche des Gehäuses 18 angeordnet sind und durch die seitliche Abschirmung der Vertiefung 20 besser sichtbar sind, beispielsweise läßt sich dadurch in gewissem Umfange Umgebungslicht ausschalten, welches die Sichtbarkeit der Leuchtdioden 19 herabsetzen könnte.

Bei der beschriebenen Ausgestaltung erhält man eine sehr robuste Konstruktion, es ist möglich, diese Druckmeß- und Anzeigeeinrichtung mit einer Batterie 17 zu versehen, die im normalen Betrieb ein bis zwei Jahre arbeitet, und es ist aufgrund spezieller elektronischer Schaltungen durchaus möglich, die Druckmeß- und Anzeigeeinrichtung ohne spezielle Ein- und Ausschalteinrichtungen zu betreiben, so daß die Druckmeß- und Anzeigeeinrichtung im wesentlichen bedienungs- und wartungsfrei ist. Ein großer Vorteil der beschriebenen optischen Anzeige ist darin zu sehen, daß auch bei flüchtigem Betrachten der Handspritzpistole 1 der jeweilige Druckwert ohne weiteres feststellbar ist.

Bei weiteren Ausgestaltungen ist es auch möglich, die optischen Anzeigefelder in ihrer Natur unterschiedlich auszugestalten, beispielsweise könnten verschiedenfarbige Leuchtdioden eingesetzt werden, so daß bereits an der Farbe der Leuchtdioden die Druckbereiche erkennbar sind. Schließlich ist es auch möglich, die optischen Anzeigeelemente zu kombinieren mit akustischen Anzeigeelementen, so daß beispielsweise bei einer Änderung der Druckwerte den Drucksignalen entsprechende Signale in unterschiedlicher Tonhöhe erzeugt werden, die dem Benutzer signalisieren, daß sich die Druckwerte geändert haben, die Tonhöhe ist dann auch ein Maß für die jeweils herrschenden Druckwerte.

## Patentansprüche

1. Flüssigkeitsabgabeeinrichtung für ein Hochdruckreinigungsgerät, insbesondere in Form einer Handspritzpistole (1), mit einer Flüssigkeitsleitung (2) und mit einem den Druck in dieser messenden Drucksensor (12), dem eine Druckanzeigeeinrichtung (14) zugeordnet ist, **dadurch gekennzeichnet, daß** der Drucksensor (12) ein elektrischer Meßwertgeber ist, der ein vom Druck in der Flüssigkeitsleitung (2) abhängiges elektrisches Signal erzeugt, daß die Druckanzeigeeinrichtung (18, 19) in Abhängigkeit von diesem elektrischen Signal unterschiedliche optische Anzeigen erzeugt und daß der Drucksensor, (12) die Anzeigeeinrichtung (18, 19) und eine diesen zugeordnete elektrische Schaltung (16, 17) in der Flüssigkeitsabgabeeinrichtung (1) angeordnet sind.

2. Flüssigkeitsabgabeeinrichtung nach Anspruch 1, **dadurch gekennzeichnet, daß** der Drucksensor (12) eine vom Druck in der Flüssigkeitsleitung (2) abhängig dehnbare Folie umfaßt, die bei Dehnung eine elektrische Spannung erzeugt oder eine angelegte elektrische Spannung oder einen durch sie fließenden elektrischen Strom verändert.

3. Flüssigkeitsabgabeeinrichtung nach Anspruch 2, **dadurch gekennzeichnet, daß** die Folie ein piezoelektrisches Material umfaßt.

4. Flüssigkeitsabgabeeinrichtung nach Anspruch 1, **dadurch gekennzeichnet, daß** der Drucksensor (12) einen vom Druck in der Flüssigkeitsleitung (2) abhängig dehnbaren Dehnmeßstreifen umfaßt.

5. Flüssigkeitsabgabeeinrichtung nach Anspruch 1, **dadurch gekennzeichnet, daß** der Drucksensor (12) eine Glasfaser umfaßt, deren Lichtleitverhalten sich abhängig von einer Dehnung und/oder Biegung ändert.

6. Flüssigkeitsabgabeeinrichtung nach Anspruch 1, **dadurch gekennzeichnet, daß** der Drucksensor (12) ein monolithischer Keramiksensor ist.

7. Flüssigkeitsabgabeeinrichtung nach einem der voranstehenden Ansprüche, **dadurch gekennzeichnet, daß** die optische Anzeige mehrere optische Anzeigefelder (19) umfaßt, die beim Ansteigen der Druckwerte stufenweise aktivierbar sind.

8. Flüssigkeitsabgabeeinrichtung nach Anspruch 7, **dadurch gekennzeichnet, daß** die Anzeigefelder (19) Leuchtquellen aufweisen.

9. Flüssigkeitsabgabeeinrichtung nach Anspruch 8 **dadurch gekennzeichnet, daß** die Leuchtquellen Leuchtdioden sind.

10. Flüssigkeitsabgabeeinrichtung nach Anspruch 7, **dadurch gekennzeichnet, daß** die Anzeigefelder Teilbereiche einer Bildschirmanzeige oder einer Flüssigkristallanzeige sind.

11. Flüssigkeitsabgabeeinrichtung nach einem der Ansprüche 7 bis 10, **dadurch gekennzeichnet, daß** die Anzeigefelder (19) in einer Reihe nebeneinander liegen.

12. Flüssigkeitsabgabeeinrichtung nach einem der voranstehenden Ansprüche, **dadurch gekennzeichnet, daß** der Drucksensor (12), die Druck- und Anzeigeeinrichtung (14) sowie die diesen zugeordnete elektrische Schaltung (15) auf einem gemeinsamen Träger (13) angeordnet sind.

13. Flüssigkeitsabgabeeinrichtung nach Anspruch 12, **dadurch gekennzeichnet, daß** der Träger (13) herausnehmbar in die Flüssigkeitsabgabeeinrichtung (1) eingesetzt ist.

14. Flüssigkeitsabgabeeinrichtung nach einem der Ansprüche 12 oder 13, **dadurch gekennzeichnet, daß** der Träger eine elektrische Leiterplatte (13) ist.

15. Flüssigkeitsabgabeeinrichtung nach einem der Ansprüche 13 oder 14, **dadurch gekennzeichnet, daß** die Flüssigkeitsabgabeeinrichtung (1) ein Gehäuse (5) umfaßt mit einem entfernbaren und wiederverschließbaren Deckel, der den Zugang zu dem Träger (13) oder das Auswechseln des Trägers (13) ermöglicht.

16. Flüssigkeitsabgabeeinrichtung nach einem der voranstehenden Ansprüche, **dadurch gekennzeichnet, daß** dem Drucksensor (12) ein Anschlußstutzen (11) zugeordnet ist, der abgedichtet in ein Anschlußstück (10) der Flüssigkeitsleitung (2) einsetzbar ist.

17. Flüssigkeitsabgabeeinrichtung nach einem der Ansprüche 7 bis 11, **dadurch gekennzeichnet, daß** die Anzeigefelder unterschiedliche Farben aufweisen.

18. Flüssigkeitsabgabeeinrichtung nach einem der voranstehenden Ansprüche, **dadurch gekennzeichnet, daß** der optischen Anzeige eine akustische Anzeige zugeordnet ist, die in Abhängigkeit von dem elektrischen Signal des Drucksensors (12) unterschiedliche Töne erzeugt.
